Europäisches Patentamt

(19) European Patent Office    (11) Publication number: **0 032 919**
Office européen des brevets                                    **B1**

(12) **EUROPEAN PATENT SPECIFICATION**

(45) Date of publication of patent specification: **24.10.84**    (51) Int. Cl.³: **D 21 C 3/16, D 21 C 1/00,**
                                                                        **D 21 B 1/38, D 21 H 3/18,**
(21) Application number: **80901405.3**                                    **A 23 K 1/12, C 05 F 7/02,**
                                                                        **C 08 H 5/00, C 09 K 17/00**
(22) Date of filing: **08.07.80**

(86) International application number:
**PCT/EP80/00047**

(87) International publication number:
**WO 81/00267 05.02.81 Gazette 81/04**

(54) **ACCELERATED PULPING PROCESS.**

(30) Priority: **19.07.79 EP 79102553**

(43) Date of publication of application:
**05.08.81 Bulletin 81/31**

(45) Publication of the grant of the patent:
**24.10.84 Bulletin 84/43**

(84) Designated Contracting States:
**CH LI**

(56) References cited:
**CH-A- 415 701**
**DE-C- 278 492**
**DE-C- 307 087**
**DE-C- 410 824**
**DE-C- 546 104**
**DE-C- 727 152**
**FR-A-1 479 952**
**FR-A-1 486 491**
**FR-A-2 333 892**
**LU-A- 73 770**
**US-A-1 717 798**

(73) Proprietor: **Prior, Eric S.**
**830 Signal Bay**
**Coos Bay Oregon 97420 (US)**

(72) Inventor: **Prior, Eric S.**
**830 Signal Bay**
**Coos Bay Oregon 97420 (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

(56) References cited:
**US-A-1 933 445**
**US-A-4 053 645**

**Abstract Bulletin of the Institute of Paper**
**Chemistry, vol. 39, no. 4, published October**
**1968, (Appleton, Wisconsin, US), S.A. Puzyrev**
**et al. "Method of obtaining fibrous materials",**
**page 353, abstract no. 3616**

Courier Press, Leamington Spa, England.

## Description

This invention relates to an improved process of breaking the lignin bond of fibrous materials in a form ranging from that of a moderately digested product for animal feed to pulps that can be utilized as chemical or semi-chemical pulp for packaging papers and boards, bleachable pulps for white papers, highly purified pulp for dissolving pulp and to simply develop surface unbonded lignin on fibrous structures to act as a binder.

The invention relates to a lignin nitration pulping process in which the nitration can be carried out in an acid solution the time of which is substantially shortened by the inclusive use of aluminium compounds.

This invention also relates to a pulping process in which the ligneous components extracted from ligno-cellulose raw material is recombined with the pulped fibers to provide added strength characteristics for packaging papers and paperboards or to act as a binder for defibered, in natural or semi-pulped state ligno-cellulosic structures.

The use of the inherent flexibility of the process time, temperature and chemical concentrations permits controlled delignification and defibering to produce animal feed, building board, packaging board and paper, bleached papers and dissolving pulp.

The potential use of nitrate containing chemicals, specifically nitric acid, as a specific pulping agent for cellulosic structures has been recognized for many years. The processes varied widely in time and acid concentration and were mostly applied to the very easily pulped fibrous structures such as straw or slivered wood or hardwoods. The processes depended on partial nitration, final oxidation and subsequent hydrolysis of the lignin structure—the acid consumption was high and the fiber produced had brittle characteristics. In such a process producing a chemical type pulp, recovery of chemical remains unsolved.

It appears that pulping processes using nitric acid have never been commercially successful. The following excerpts from patents granted or suggested processes on easily pulped fibrous materials are indicative of the scope and problems (sometimes hazardous) involved in such processes where high acid concentrations and usage with lengthy process times make commercial practice unworkable and uneconomic with no conceivable advantages over present day conventional processes.

Casey—Pulp & paper, Vol. I

### Nitric acid pulping of poplar wood

| | Patentee | | |
| --- | --- | --- | --- |
| | Dreyfuss | Miles | Solechnik |
| Acid concentration (%) | 6 | 8 | 7 |
| Time of digestion (hours) | 3 | 9 | 1.5 |
| Temperature (°C) | 80 | 100 | 98 |

### Nitric acid pulping of wood wafers (1/100 inch (0.25 mm) thick

| | |
| --- | --- |
| Acid concentration (%) | 42 |
| Acid temperature (°C) | 68 |
| Acid consumption/ton (1000 kg) pulp | 15% |

### Nitric acid pulping of bagasse

| | |
| --- | --- |
| Acid concentration (%) | 5 |
| Cooking time (hours) | 1.0 |
| Cooking temperature (°C) | 80 |
| Acid consumption/ton (1000 kg) pulp | 15% |

**0 032 919**

Nitric acid pulping of straw

| | |
|---|---|
| Acid concentration (%) | 2—6.0 |
| Cooking time (hours) | 4—6.0 |
| Cooking temperature (°C) | 90 |

Alternatively

| | |
|---|---|
| Acid concentration (%) | 42.0 |
| Cooking time (hours) | 4.0 |

In the process of the present invention chemical concentrations are lower, processing time greatly reduced and nitrating chemical consumption does not exceed 5% on pulp yield.

The pulping process of the present invention is based on the nitration of the lignin molecule, which is not soluble in an acid solution, using nitric acid as the nitrating agent, and making said nitrated lignin soluble in an alkaline solution, either in one or two steps, preferably under conditions of atmospheric pressure and temperatures below 100°C, in times substantially lower than conventional chemical pulp processes.

Accordingly, the invention relates to a process for pulping ligno-cellulosic material wherein said material is treated with aqueous nitric acid which process if characterized by using an aqueous nitric acid solution having a nitrate ion concentration of 0.001 to 9.0 weight percent and containing an aluminum compound in an amount of at least 0.01 parts by weight of aluminum ions for each 10 parts by weight of $HNO_3$.

In a specific embodiment the inventive process comprises treating fibrous ligno-cellulosic material to form defibered pulp material comprising the steps of submerging in or spraying of the fibrous ligno-cellulosic material with aqueous nitric acid having a nitrate ion concentration of 0.001 to 9.0 wt. % so as to nitrate ligneous component of said material; draining the nitrated ligno-cellulosic material from said nitric acid solution and thereafter defibering directly by mechanical means to obtain said pulp material, or treating the said nitrated ligno-cellulosic material with an alkaline extraction liquor so as to dissolve ligneous component out of the material and separating the resultant cellulosic pulp from the lignin containing extraction liquor as well as, optionally, recombining a part or all of the ligneous component of the lignin containing extraction liquor with the cellulosic pulp.

In the process of the invention the pulping is carried out under acidic conditions with $HNO_3$ together with $Al_2(SO_4)_3$ (or another aluminum salt) as an accelerator, followed by alkaline extraction of the lignin. In this acidic approach the nitrate ion concentration will preferably vary from 0.015—1.5% for pulping straw and preferably from 2.5%—5.0% for pulping wood dependent on species cooked and pulp purity desired. However, lower nitric acid concentrations can be used, in particular when pulping grassy structures, such as straw.

Spruce chips, for example, can be cooked to a high strength pulp and Kappa No. 75 with a nitrate concentration in the acidic cooking liquor of 3.8%.

The nitrate ion used in contacting the dry cellulose material can thus go up to a maximum of 5.5% in the case of wood in the acidic pulping process (followed by an alkaline delignification step).

In a particular embodiment the process of the invention is carried out with a nitrate ion concentration between 0.001 and 0.15%, e.g. up to 0.14%, preferably between 0.01 and 0.15%.

In a further embodiment with the acidic pulping process the alkaline delignification step may be omitted when the nitric acid concentration is increased, i.e. above 1.5% in the case of straw and above 5.5% in the case of wood.

Actual usage of nitrating chemical with recycling does not exceed 5%, and alkali usage—again with recycling of the black liquor—is 4—6%. Together this total chemical usage compares favourably with the make-up chemicals used in the Kraft process where full, expensive and complicated, chemical recovery is practiced.

Since the cooking liquors of this invention are simple solutions of purchased off the Shelf-chemicals no complex system of liquor manufacture or control is necessary and the low concentrations and recycling capability make for low usage and cost and elimination of a recovery system.

Where the black liquor that is purged is desired as a source of energy rather than be recombined with the pulp, it can of course follow the conventional system in which the recovery boiler uses the heat of combustion of the lignin to recover chemicals and provide process heat.

Conventional pulp mills require large capital investment due to the minimum size that is economic (250 tons (250,000 kg) of pulp per day), to the high temperatures and pressures involved and the absolute need to recover and mix the complex cooking chemicals. Further, substantial investment is required for both air and water pollution control. The process of this invention uses simple chemicals, does not require either vacuum or superatmospheric pressure or temperatures over

3

100°C—offers minimal and easily avoidable problems of air and water pollution and offers high value usability of the ligneous products of pulping, normally disposed of by burning or wasted by dumping.

Furthermore, it has been found that in the chemical pulping process involving nitration of particulate, fibrous lignocellulose raw material with nitric acid which pulping may be coincidental with or followed by an alkaline extraction of the nitrated lignin from the fibrous material leaving softened, partially defibered cellulosic structures which can further be completely defibered by normal mechanical means, the total time required for nitration/extraction can be substantially shortened by including a proportionate amount of aluminum compounds to the $HNO_3$ nitrating solution. While the precise time required for the nitration/extraction process either simultaneous or sequential is dependent upon the variables of particle thickness, temperature and reagent concentration, it can be said for the process of the present invention that total process time is greatly reduced. For example, for chemical type high yield wood pulps from coniferous wood chips the total process time is 90 minutes using atmospheric pressure and temperatures not exceeding 100°C. This time is to be compared with conventional sulphite process time of 6—7.50 hours and the sulphate kraft process of 2.5—5.0 hours at high pressure and temperatures.

## 0 032 919

### TABLE 1
#### Pulping processes compared

| | Liquor concentration wt. % | | Total cooking time | Temperature °C | Pressure P.S.I.G. (kPa, gauge) | Fiber species |
|---|---|---|---|---|---|---|
| 1. Casey, "Pulp and Paper", Vol. 1 p. 169 | | | | | | |
| Sulphite-bleach grade | | | | | | |
| Calcium base | 6.0 | | 6.25 hrs. | 140 | 80 (552) | Western |
| Amonia base | 6.0 | | 7.50 hrs. | 146 | 80 (552) | Conifer |
| 2. Casey, pp. 230—264 | | | | | | |
| Sulphate—High yield | 18.5 | | 2.50 hrs.[1] | 170 | 140 (965) | U.S. southern pine |
| Sulphate—Bleachable | 22.0 | | 5.00 hrs.[1] | 160 | 100 (690) | |
| [1] includes time to bring to temperature | | | | | | |
| 3. TAPPI CA Report, 52, pp. 17—19 | | | | | | |
| Bagasse—Soda process | 6.5 | | 26.50 min.[2] | 170 | 114 (787) | Bagasse |
| [2] includes cooking time in blow tank | | | | | | |
| 4. TAPPI CA Report 52, pp. 26—27 | | | | | | |
| Bamboo—Kraft process | 17—19 | | 1.25 hrs. | 150 | 85 (586) | Bamboo |
| 5. Accelerated pulping—Sequential process | | | | | | |
| [3] 10% of $Al_2(SO_4)_3 \cdot 18 H_2O$, based on the $HNO_3$ (100%). [4] alkaline delignification step | | | | | | |
| Examples (invention) | $HNO_3$[3] | NaOH[4] | | | | |
| High yield pulp | 5.5 | 0.3 | 90 min. | 85—100 | None | U.S. Pine |
| Sugar cane (bleachable) | 2.0 | 0.2 | 45 min. | 85—100 | None | Bagasse |
| Bamboo (bleachable) | 3.0 | 0.2 | 45 min. | 85—100 | None | Bamboo |
| Wheat straw (bleachable) | 1.0 | 0.2 | 45 min. | 85—100 | None | Straw |
| Linerboard pulp | 4.0 | 0.2 | 90 min. | 85—100 | None | Spruce |
| Rice straw | 0.5 | 0.2 | 45 min. | 85—100 | None | Straw |
| 6. Casey, "Pulp & Paper" Vol. 1, p. 406 Soda | 1.5 | | 2.00 hrs. | 150 | 100 | Rice straw |

The pulping with $HNO_3$ under acidic conditions is conducted in the presence of an aluminum compound. Examples for such aluminum compounds are aluminum sulfate (alum), aluminum chloride, aluminum oxides, such as $Al_2O_3 \cdot 1/2 H_2O$, aluminum phosphates, aluminum nitrate, etc. These salts should be soluble in the aqueous nitric acid used in the pulping process.

With aluminum chloride it is preferred to use a hydrated product or a hydrated product with additional water to avoid violent reactions when adding it to the pulping liquor. To avoid excessive hydrolysis of the aluminum chloride to aluminum hydroxide or oxide hydrate which must be redissolved later, nitric acid can be added. When using aluminum nitrate as starting material the introduction of foreign ions is avoided.

The stated aluminum compounds should be used in amounts leading to similar aluminum ion concentrations in the pulping liquor as compared to the use of aluminum sulphate (paper makers alum) in the process described hereinbefore which alum is used in an amount of 0.8 to 1.3 parts by weight per each 10 parts by weight of $HNO_3$ (100%). Comparing the molecular weights of the alum $(Al_2(SO_4)_3 \cdot 18\ H_2O=666)$ with, for example, $Al_2O_3 \cdot 1/2\ H_2O$ (111), it follows that for achieving the same aluminum ion concentration in the pulping liquor the aluminum oxide should be used in an amount of 1/6 compared to the alum. In terms of aluminum ion concentration (or aluminum concentration) this means that it should be from 0.065 to 0.105 parts by weight of aluminum ions per each 10 parts of $HNO_3$ (100%).

While it has been noted that there is a minimum amount of aluminum ions to achieve a remarkable effect, e.g. 0.01, 0.02, 0.03 or 0.04 parts by weight of aluminum ions per each 10 parts of $HNO_3$, there is actually no strict upper limit, and the aluminum ion concentration could well go above 0.105, for example up to 0.15, 0.2, or even more.

It has been found, however, that with exceeding a certain aluminum level no further advantage as to time reduction is obtained so that higher amounts are not desirable under economic and environmental pollution point of views. The preferred range is 0.065 to 0.105 parts by weight of aluminum ions per each 10 parts by weight of $HNO_3$, a value of about 0.08 giving desirable results in the practice of the process of the invention.

Besides reduction in process time, a further point of view is the inherent strength characteristics of the fiber obtained according to the process of the invention which characteristics can be influenced by the amount of aluminum. Thus, for every kind of ligno-cellulosic material, e.g. bagasse or bamboo, the optimum amount of aluminum can vary depending on what reduction in process time and what fiber characteristics are demanded.

The ability of the present process to be conducted at atmospheric pressure eliminates the explosive release of pressure that is normally used in conventional systems to empty the digester. This pressure release additionally defibers at least partially the natural fiber structure. The basic preservation of the fibrous structure permitted by the non pressure system permits reduced chemical usage by easy drainage of cooking liquor and washing out of the residual cooking and black liquor leaving the fibrous structure still substantially intact. Defiberization is then accomplished mechanically with minimum loss of fiber length and degradation of basic fiber structure. The defiberization can be closely controlled to preserve long thin fiber bundles from fibrous structures made up of very short (under 0.5 mm) fibers thus improving strength and maintaining good drainage characteristics even through the bleaching process where repeated washings present a major problem if drainage is poor.

All forms of ligno-cellulosic materials can be subjected to the pulping process of the present invention. That includes, without limitation, woody materials such as U.S. Southern pine, spruce, beech, and bamboo, as well as grassy materials which find usage such as straw, bagasse, and kenaf. In addition to these normally used sources of papermaking fibers, other, now wasted, fibrous plants, such as rape seed straw, and rice husks, which resist conventional pulping methods, can be reduced to commercially useful fiber by this process. High yield shrub growth, such as coppice willow, or agricultural waste, such as cotton stalks, presently unused, produces, including its bark, an acceptable, economically useful fibrous material with my process. Besides such virgin materials, the process of the present invention can be used to delignify and further defiber paper wastes, such as waste newsprint made from mechanical (groundwood) pulp or waste corrugated boxes containing semichemical board. Additionally, using the instant invention, it is practical to economically pulp accumulations of chipped wood slab waste and also sawdust, which is generally discarded.

The raw material should be in a uniformly sized particulate form before being submitted to the nitration step. Virgin plant material, for example, can be chopped, crushed, chipped, flaked or defibered, depending on the initial fibrous form to be processed. Paper wastes should be mechanically pulped in water to the defibered state, for example, to obtain a slurry containing about 5 to 9 wt. % cellulose. Paper wastes are readily impregnated and reacted with the nitrating agent. In the process, mechanical and semimechanical pulps can be effectively upgraded through defibration of uncooked fiber bundles by delignification. The pulping process of the invention also permits the simultaneous removal of waste paper contaminants such as ink, plastics and wax, due to the temperatures used and the open vessel processing which permit separation of the contaminants. At the temperatures required for the pulping process and the low consistency during which reaction takes place these contaminants are released, rise to the surface, and can be aspirated easily from the vortex center of a second hydrapulper where they concentrate. Such contaminants which can represent 1—2% of the waste fiber furnish can be dumped along with the wire, rope and other extraneous contents found with waste paper.

Waste papers are pulped in a normal way in a hydrapulper and the wire, rope, wood, sheet, or film plastic removed by the conventional ragger.

The suspension of waste fiber is then pumped to a second hydrapulper where it is nitrated at 80—90°C with only moderate turbulence to permit the aspiration from the vortex of the wax, ink, styrofoam and plastic residues that will accumulate there.

The nitrated, cleaned material is then passed through a high density press to remove excess acid, then passed over a washer to remove any residual weak acid. After treatment with alkali excess lignin and alkali are removed by high density pressing and washing.

After defibering, conventional paper machine practice is followed.

The black liquor derived from the press can be recycled to the extraction step to fully utilize any unexpended alkali or partly diverted to the paper machine where it can be precipitated on the fibers or to a settling basin where it can be precipitated and concentrated.

The nitration (cooking) of the ligno-cellulosic raw material is accomplished by submerging or wetting with recycled nitrating agent the material in a sufficient amount at elevated temperature, preferably 75 to 100°C, to accelerate penetration of the fibrous structure and react with the lignin. In order to permit the use of a non pressure open vessel for the nitration step with minimum emission of harmful nitrogen oxide vapors when using nitric acid as the nitrating agent, it is preferred to use as dilute nitrating agent as possible with the limiting factors of time and pulp quality factors considered. The exact percentage used will be dependent on the type of fibrous structure being pulped, the required level of delignification, time limitations and pulp quality desired.

The ligno-cellulosic raw material may be subjected to steaming and/or impregnation step before the cooking-nitration step. The impregnation is done with a dilute concentration of the cooking liquor at low temperatures (e.g. about 70°C or below, e.g. about 50°C or below) and serves three purposes:

a) utilization of drained concentrated liquor after the cooking process together with the dilute cooking liquor from the washing process,
b) conservation of heat and chemicals by recycling liquor, and   .
c) even moisture distribution throughout the fibrous structure before cooking.

The amount of nitrating agent used in the nitration step should be sufficient to completely submerge or contact by recirculation the particulate ligno-cellulosic material and adequate, on a stoichiometric basis, to nitrate substantially all of the readily accessible lignin content of the raw material. This will usually mean, for example, formation of a mixture of about 5 parts of liquid nitrating agent to about 1 part of dry wood to about 10 parts of liquid nitrating agent for 1 part of dry grass fiber (straw). Where the nitration liquor can be circulated and heated indirectly, lower ratios can be used. Additionally, the nitrating agent can be sprayed or it can be foamed in low concentration where minimum quantities but overall intimate contact is needed.

The temperature at which the nitrating cooking step is performed should be adequate to effect nitration of the lignin, but is preferably not so high (over 100°C) as to cause degradation of the cellulosic fibers or so low—below 75°—to take excessive reaction time. Temperatures in the range of 75 to 98°C, in particular 85—95°C, are preferred. With the use of the pulping process of the invention for making building and packaging boards higher temperatures up to 160°C, for example 130 or 150°C, can be employed for short periods to effect curing of the lignin.

The nitration-extraction process of the present invention can be performed in a short period of time, under atmospheric pressure conditions, although above atmospheric pressures, e.g., up to about 10, 15 or 35 p.s.i.g. (70,103 or 241 kPa gauge), can be used if it is desired to shorten further the time, but can be used chiefly to provide ease of production on a continuous basis. The pressure may be up to about 150 p.s.i.g. (1.03 MPa gauge) and such may be particularly advisable in certain situations as noted below. The improvement provided by the present invention is independent of whether the process is conducted under atmospheric pressure or at elevated pressures. The introduction of a non-pressure system is designed specifically for use in new and relatively small pulping installation (10—50 tons (10,000—50,000 kg) per day) throughout the world. However, it is recognized that the requirement for larger production units can be met by larger or multiple units and that in many instances existing pulp mill equipment could be utilized to reduce further investment costs while minimizing present pollution problems.

All present commercial systems employ high pressures and temperatures coupled with long cooking periods for pulping woody fibers to chemical grade pulps. It has been found that by cooking with light pressures (e.g. up to 15 to 35 p.s.i.g. (103—241 kPa gauge)) while holding temperatures certainly below 110°C and preferably below about 100°C, the nitration period can be shortened to about 5 to 7 or 10 minutes for wood flakes, straw, etc. Conventional sized wood chips are usually too irregular in size for cooking by the instant process and should be made uniform and generally smaller in size to achieve uniformly cooked and defiberable pulp of normal quality levels in one hour's time.

Using light pressures with either wood flakes or chips makes practical the conversion of existing sulphite pulp mills to the process of this invention, however the use of pressure for pulping any fibrous structure or wood flakes or chips is not necessary and is recommended only to fill the utilization possibilities of existing installations.

Pulping systems such as the "Kamyr" or "Pandia", which are continuous, operate at high pressure, about 150 to 175 p.s.i.g. (1.03—1.21 MPa gauge). These units are also adaptable for

**0 032 919**

processing wood chips in one stage in accordance with the present invention to produce a semi-chemical type product or full chemical pulping.

Typical times and conditions at these different pressures for treating several ligno-cellulosic materials and where an alkali delignification state is being used, are in Table 2a.

TABLE 2a
Comparative HNO₃*⁾ pressurized nitration cycles chemical or
delignified pulp with alkali stage

A. Non-pressure system—Wood flakes or equivalent

|  |  | Pine | Spruce | Beech | Straw |
|---|---|---|---|---|---|
| Cooking time | Minutes | 15 | 15 | 15 | 15 |
| Temperature | °C | 85—100 | 85—100 | 85—100 | 85—100 |
| Liquor concentration | % HNO₃ | 5.5 | 5.0 | 4.0 | 1.0 |

B. Pressure 15—35 P.S.I.G. (103—241 kPa gauge)—Wood flakes or equivalent

|  |  | Pine | Beech | Straw | Bamboo |
|---|---|---|---|---|---|
| Cooking time | Minutes | 7 | 7 | 5 | 7 |
| Temperature | °C | 95—100 | 95—100 | 95—100 | 95—100 |
| Liquor concentration | % HNO₃ | 5.5 | 3.5 | 0.5 | 2.5 |

C. Non-pressure system—Wood chips

|  |  | Spruce | Beech |
|---|---|---|---|
| Cooking time | Minutes | 60 | 45 |
| Temperature | °C | 95—100 | 95—100 |
| Liquor concentration | % HNO₃ | 4.0 | 3.5 |

D. Pressure 15—120 P.S.I.G. (0.103—0.827 MPa gauge)—Wood chips

|  |  | Spruce | Beech | Beech Semi-chemical |
|---|---|---|---|---|
| Cooking time | Minutes | 45 | 30 | 15 |
| Temperature | °C | 95—100 | 95—100 | 95—100 |
| Liquor concentration | % HNO₃ | 4.0 | 3.5 | 3.0 |

*⁾ 10% of Al₂(SO₄)₃ · 18 H₂O, based on HNO₃ (100%)

Additionally, it has been found that the use of pressure permits full defibering of wood fibrous structures in the acid nitration stage, and a lignin alkali extraction stage may thus be avoided since the lignin component is solubilised by this stage. This can be accomplished when nitric acid is the nitrating agent by raising, dependent on fibrous structure processed, the HNO₃ liquor concentration by about 2.5 to 3.5% over that employed for the normal nitration-alkali delignification sequence, and extending the time of reaction slightly, e.g., by about 3—5 or more minutes. Thus, without using pressure, i.e. conducting the process under approximately atmospheric pressure conditions, the HNO₃ liquor concentration is preferably at most 5.5 weight percent, in particular at most 5 weight percent. When employing pressure, the HNO₃ concentration can go up to 9.0 weight percent and preferably it is no more than 7.5 or 7.0 weight percent. Of course, the lower concentrations as stated for the pressurized nitration step can be advantageously used.

For grassy fibrous structures pressure is not necessary and only a 0.5—1% additional acid concentration is required for achieving full defibering in the acid nitration stage.

This embodiment of the present invention without an alkali stage produces a fiber with different strength characteristics from that obtained when delignification is accomplished by alkali extraction. The fiber is, however, of very light colour and high yield.

8

Regardless of the pressure employed, it is not necessary to vent any gases, in fact it is preferable, since with the gases contained and retained in the treating vessel, a false pressure is created, permitting the keeping of operating temperatures below 100°C thus avoiding cellulose degradation. The degree of false pressure created is dependent on nitrating agent concentration.

Typical times and conditions at different elevated pressures for treating several ligno-cellulosic materials without there being an alkali delignification state, are in Table 2b. Where additional pressure is needed, as in the "Kamyr" pulping process, it can easily and economically be obtained with air injections. The low temperatures involved reduce the chronic problems of scaling and maintenance to a minimum.

TABLE 2b
Comparative HNO₃*) pressurized nitration cycles, alkali
delignification stage eliminated

A. Pressure 15—35 p.s.i.g. (103—241 kPa gauge)—Wood flakes or equivalent

|  |  | Chemical pulp | | | |
|  |  | Pine | Beech | Straw | Bamboo |
| --- | --- | --- | --- | --- | --- |
| Cooking time | Minutes | 10 | 10 | 6 | 10 |
| Temperature | °C | 95—100 | 95—100 | 95—100 | 95—100 |
| Nitric acid | % | 9.0 | 5.5 | 1.5 | 5.0 |

B. Pressure 100—150 p.s.i.g. (0.70—1.03 MPa gauge)—Wood chips

|  |  | Chemical pulp | |
|  |  | Spruce | Beech |
| --- | --- | --- | --- |
| Cooking time | Minutes | 45 | 45 |
| Temperature | °C | 95—100 | 95—100 |
| Nitric acid | % | 8.0 | 5.5 |

C. Pressure 35—150 p.s.i.g. (0.24—1.03 MPa gauge)—Wood chips

|  |  | Semi-chemical pulp mixed hardwoods Beech |
| --- | --- | --- |
| Cooking time | Minutes | 10 |
| Temperature | °C | 95—100 |
| Nitric acid | % | 4.0 |

*) 10% of Al₂(SO₄)₃ · 18 H₂O, based on HNO₃ (100%).

The ability to conduct the nitration step at atmospheric pressure means that non-pressure vessels can be employed, providing a substantial savings in equipment and operating cost compared to conventional high-pressure pulping processes. Although a non pressure vessel is employed for the nitration step, it is preferred to maintain closure with recycling of any vapors to prevent heat loss and possible emissions. Present environmental laws in the U.S.A. permit a maximum nitrogen oxide emission level of only 185 ppm. The precise temperature at which nitrogen oxide or other gases can be released from the slurry in the nitration step will depend upon the concentration and form of the nitrating agent, since the higher the concentration, the lower will be the temperature at which vapor emissions will occur.

When a closed, non-pressure vessel is being used to conduct the nitration step in the process of the present invention, it will usually be preferred to employ a temperature no higher than 90 to 95°C, e.g. within the range of 85 to 95°C. However, as stated hereinbefore, when operating the nitration step under pressure, a temperature of up to 100°C or somewhat over 100°C may be employed. It is an outstanding advantage of the process of the present invention that it can be performed in non-pressure vessels in economically short time periods, without causing difficult air pollution problems. Additionally, the elimination of the usual chemical recovery system eliminates emission of dust particulates which are a major source of air pollution.

The nitration step, and indeed the entire process of the present invention, can be carried out continuously, semi-continuously, or batchwise, whichever is desired. Selection of equipment will of course depend upon that choice. It is generally more economical to conduct the process continuously, in which event the nitration step can advantageously be conducted in a screw conveyor unit. Batchwise nitrations can be carried out quite well in a modified hydrapulper, making possible the economic operation of very small mills (10 tons (10,000 kg) per day).

The nitrating agent impregnation and cooking steps are conducted for a time sufficient to produce the required residual level of the ligneous component of the ligno-cellulosic raw material after extraction of the lignin.

The time required to effect the desired degree of nitration is dependent, of course, on the strength of the nitrating agent used, as well as the temperature employed, since higher strengths and temperatures promote the nitration reaction. Additional considerations are the type and particle size of the ligno-cellulosic material being processed. In general, with the process of the present invention the total nitration time can be as short as about 5 minutes or as long as about 30 minutes or to about 90 minutes if wood chips are used. For straw or bagasse which will go into storage before delignification, a simple spray or foam application at lower levels of nitrating agent concentration at room temperatures is all that is necessary to obtain the desired level of nitration.

Following the nitration step the ligno-cellulosic material is separated from the nitrating agent solution and washed with water to remove surface chemical. The wash water is preferably hot, e.g. at a temperature of 85 to 100°C, and is used in minimal amounts. One efficient method, if a continuous system is used, is by reverse flow washing or with reverse flow washing on a vacuum filter. Alternatively, draining, followed by flooding with wash water and a second draining can be used.

When the cellulosic raw material is from waste paper products, the removal of the excess chemical is accomplished with a high density press.

The separated nitrating agent is advantageously returned to the nitration step to be used over again, as is any wash water. The recycled nitrating agent stream will be fortified with concentrated chemical and with a fresh source of aluminium ions so as to restore the concentrations of those reagents to the desired levels.

The nitrate fibrous structures remain intact and appear to be essentially the same as when those particles were introduced to the nitrating agent submersion step, except for a slight softening and darker colour. The nitrated fibrous structures can be held in storage for months without either deteriorating or causing problems in the lignin extraction and defibering steps which follow. This storability feature can be of special advantage in the case where straw, bagasse or similar grassy plants are to be pulped since grassy plants are usually harvested during relatively short seasons. This presents a problem because grassy plants are particularly susceptible to deterioration during storage. By the process of the present invention the excess raw material can be nitrated by spraying or foaming a dilute solution of nitric acid to obtain intimate, overall contact with the fiber and held in storage in that form without being degraded. Extended periods of storage have been experienced up to one year in contact with the acid at a moisture level of about 25% permitting usage of a lower percentage of acid to dry fiber.

The nitrated ligno-cellulosic material can next be submerged in an alkaline, aqueous extraction solution, e.g. a solution of sodium, calcium, potassium and/or ammonium hydroxide or mixtures of same so as to dissolve most of the nitrated lignin out of the fibrous structure. The lignin nitrate is substantially insoluble in acidic aqueous media, but is readily dissolved in basic aqueous media, for example having a pH of 7.5 to 12. The alkaline concentration of the extraction solution must be sufficient that the solution will leach out, or dissolve, most of the nitrated ligneous material in the fibrous structure. Usually it is preferred to use an alkaline strength (alkali metal bases such as NaOH or KOH, or $NH_4OH$ of 0.1 to 0.3 wt. %. The alkaline consumption is basically one of bringing the starting pH to about 12 and can therefore be dependent upon the concentration of residual nitrating agent remaining if it is acidic.

The amount of the alkaline extraction solution used should be adequate to completely submerge or continuously contact the ligno-cellulosic material and dissolve out most of the nitrated ligneous components. Usually the amount of alkaline extraction solution used will be in the ratio of 6 or 10 to one part cellulose fibrous structures, dependent on process used and fiber structure being processed.

The temperature at which the alkaline extraction step is conducted should be sufficiently high to effect dissolution of most of the nitrated ligneous material. Preferably a temperature of 75 or 85 to 100°C is used, normally 95 to 100°C. Temperatures as low as about 65°C can be used for grasses which will extend the time necessary for delignification. These low temperatures are particularly important in producing animal feed or partially defibered pulp from agricultural residues. Where straw as an example for an agricultural residue has been sprayed with nitric acid as a nitrating agent and held in storage, delignification with alkali at about 50°C will produce with mechanical defibering a fully defibered pulp suitable for the manufacture of corrugating medium.

The alkaline extraction step is also performed under atmospheric pressure conditions, thereby permitting the use of non-pressure vessels and avoidance of expensive high pressure equipment. Closure of the vessel is desired only to conserve heat. There are no fumes or chemical gases given off unless $NH_4OH$ is used. Pressure equipment could be used but increased temperatures using dilute alkaline solutions will normally result in degradation of the cellulose and loss of fiber strength.

It will be recognized that the time required to effect the desired degree of extraction is dependent on the strength of the alkaline extraction solution used, the particle size and type of the ligno-cellulosic material and the temperature at which the extraction is conducted. In general, however, the total time required for the lignin extraction will be no more than about 30 minutes, being within the range of 5 to 15 minutes for agricultural residues and wood flakes and 30 minutes for wood chips.

For the extraction step, it can advantageously be in a hydrapulper or a screw conveyor may be preferred for continuous operations.

After treatment with the alkaline extraction solution, the fibrous, cellulosic material is separated from the lignin containing solution by drainage for wood chips or preferably by a high density press for straw or similar fibrous structures. The mild, short cooking conditions are such that the individual fiber structure and small fiber chains can, by controlled mechanical defiberization, be maintained as whole and complete fibers—for example straw fibers measuring about 1.2 mm in length and only about 0.006 mm in width—are preserved intact. Conventional paper making fibers (pine) measure about 0.05 mm in width. The principal benefit of preserving fiber length, either individual fibers or chains of small fibers, is that it enables one to manufacture higher strength paper out of the final pulp and improves drainage characteristics.

When the desired degree of cellulose purity is obtained, the cooked delignified fibrous structure is mechanically defibered and then conveyed to screens where any remaining outsize fiber bundles are screened out and returned to the cooking steps for further lignin extraction and defiberization. From this point on, the separated cellulosic pulp is subjected to normal paper mill operations of cleaning and formation of the fiber web on the paper machine to make board or paper.

After the extraction step, the alkaline solution contains dissolved ligneous components and is dark reddish brown in colour and is commonly referred to as "black liquor".

As the alkaline black liquor is recycled to the lignin extraction process, the content of dissolved solids in the black liquor will grow to a maximum tolerable concentration, e.g., somewhere in the range of 10 to 25 wt. %, generally less than 20 wt. %. An appropriate portion of the black liquor should be purged regularly (5—10%) and replaced with make-up alkali in order to prevent excess increase in the concentration of the dissolved solids and to maintain required pH level. The black liquor purge stream can be disposed of by various means such as by dumping as waste, or by concentrating and burning as in the conventional sulphate recovery system. Alternatively, the black liquor purge stream can be combined with the completely defibered pulp to supply ligneous binder for fiber web products prepared from the pulp, especially paperboard to develop or extend paper sizing materials or to act as binding material in the manufacture of building or heavy packaging board.

In the manufacturing of paperboard and the like, where coloration, is not critically important, it has been found advantageous to add the lignin-containing extraction liquor up to 15% black liquor solids to the cellulosic pulp which results in a darker but acceptable paperboard product, due to the precipitation of the lignin on the fiber. In the course of forming the paperboard product on the paper machine from the cellulosic pulp, aluminium sulphate (papermaker's alum) is normally added to the pulp in an amount sufficient to lower the pH of the pulp within the range of 5.0 to 6.5. When the dissolved ligneous material has been added back to the pulp in accordance with the present invention, such subsequent lowering of the pulp's pH causes an amorphous precipitate of the lignin to form, which deposits itself on the cellulosic fibers. A major portion of the very fine fibers suspended in the pulp adhere to and are retained by the precipitate as well. This is beneficial because in the conventional paper making processes cellulose debris and short fibers, which often amount to 0.3 to 2.5 wt. % of the total fibers, are not retained on the fiber web, but instead are lost with the drain and wash water, exacerbating the pollution problems or build up concentration in the overall papermaking process, requiring addition of retention agents to assist retention in the fiber web.

A further benefit of adding the extracted ligneous material back to the cellulosic pulp according to the process of the present invention is that the paperboard or other fiber web produced from the lignin-containing pulp will be in most physical properties stronger than if the lignin were not present, this being particularly so when waste paper fibers are incorporated into the ultimate paper product.

The extracted ligneous component may be added back to the cellulosic pulp in aqueous solution form. This can be done by simply adding the untreated black liquor directly back to the pulp. Alternatively, the ligneous material can be removed from solution in the black liquor and then mixed with the pulp. To remove the ligneous material from solution in the black liquor an acid, preferably nitric acid, can be added to the black liquor at a temperature of 15 to 90°C to cause the ligneous material to precipitate as an amorphous flocculant. Separation of the precipitate from the mother liquor can be efficiently accomplished by centrifugation or by decantation in a settling basin. The amount of acid used is preferably a quantity sufficient to lower the pH of the black liquor to about 7.0 with alum used thereafter to bring it to lower levels. The mother liquor is clear but slightly colored and contains some dissolved solids, usually less than 0.5 wt. % thereof. The mother liquor can be recycled to the nitrating

**O 032 919**

agent impregnation step or alternatively where the nitrating agent is nitric acid it may be used again as a source of acid in the precipitation of the ligneous material from the black liquor. The precipitated concentrated ligneous component can be resolubilized with alkali but this is not necessary for addition to fiber slurry or paper web.

When the alkali lignin extraction process is complete, the pH of the black liquor will be from 8.5 to 9.5, which is lower than that of conventional alkaline processes which are usually in the range of 11 to 12. It is recognized that the neutral sulphite process for semichemical pulp (NSSC) produces a neutral pH 7.0 black liquor. However, this liquor has no value either for the purpose of chemical recovery or for its lignin constituents and is therefore one of the major polluting processes in use unless tied into a kraft mill operation for chemical recovery. Sulphite acid systems produced black liquor in a pH range of 1.0 to 2.0. The factor of an essentially neutral pH makes the black liquor obtained with the present invention substantially more amenable to handling and use in subsequent chemical processing. Additionally, the black liquor of the present invention has a low range of $BOD_5$ (Biological Oxygen Demand—5 day) and COD (Chemical Oxygen Demand), permitting its discharge, if it became necessary, in controlled amounts, e.g., up to 30%, in the normal urban effluent stream. Typical comparative pollution data are as follows:

| Values in mg/liter | Present invention accelerated pulping black liquor | Waste paper mill effluent | Sulphite mill black liquor |
|---|---|---|---|
| 5 Day biological oxygen demand | 1500 | 8010 | High |
| Chemical oxygen demand | 5685 | 16700 | 230,000 |
| Permanganate number | 11215 | — | 400,000 |

The $BOD_5$ value when related to recently recorded (North America) $BOD_5$ discharges per ton of pulp produced shows the following values: sulphite mill 109 kg; integrated sulphate pulp and paper mills, 15 kg; waste paper mill, 10 kg; and the accelerated pulping process, 30 kg. The low figure of the sulphate mill is reached only by burning all the black liquor solids produced to recover the major portion of the chemicals used in the process and by additional strict control of the remaining pollutants.

An alternative use for all or part of the solid ligneous material removed from solution in the black liquor is to fertilize plants. By using potassium hydroxide or ammonium hydroxide as the alkaline extraction agent, followed by phosphoric acid to completely neutralize the black liquor, a material is obtained which can be used as a balanced fertilizer for plants containing nitrogen values from the nitric acid and ammonium hydroxide or alternatively potassium from the use of potassium hydroxide, phosphorus values from the phosphoric acid precipitation step, and humus-supplying values from the ligneous components. In dry form the ligneous solid is brown in colour, not malodorous (having a mild vanillin scent), almost tasteless and hygroscopic. Normally, expected usage would be in the form of liquid fertilizer.

The ligneous solid that can be obtained from the black liquor produced in the process of this invention can be especially useful as a plant fertilizer because it is low in toxic phenolic compounds, generally containing no more of those compounds than are present in the original plant fiber structure. When tested for toxicity and as fertilizer on barley and oat seeds in inert clay, the ligneous solid of this invention performed well, as evidenced by the fact that 95% of the seeds germinated and 95% of the plants exhibited normal growth.

In summary, the black liquor obtained in the process of the present invention may be utilized with only minor modification uniquely and economically in a variety of ways as a binder, water repellant or size, extender for fortified rosin size, stiffening agent in paperboard, hygroscopic fertilizing additive to soil, extender for resins such as phenolics and retention agent in papermaking.

The solids, i.e. nonvolatiles, in the black liquor are referred to as the ligneous component. Although there are present chemicals other than lignin and lignin nitrate, such as gums, waxes, etc., in the ligneous component, the lignin and lignin-nitrate comprise the major component. The useful ligneous component can be precipitated from its mother black liquor by acidifying, preferably to a pH of 4.5 to 5.5, with any mineral acid or acid salt, but of particular usefulness are ordinary papermaker's alum (aluminium sulphate), recycled nitrating agent from the process and phosphoric acid.

For normal papermaking the black liquor or the black liquor precipitate resulting from acidification, e.g., with nitric acid and/or alum, can be added to the cellulosic pulp. The black liquor in its neutral pH form or acidified can be foamed and added to the pulp at the size press or wet presses. Unlike kraft liquor the black liquor under any normal treatment either in solution or precipitated exhibits a minimum and non-troublesome amount of foaming. The foaming of the black liquor, either itself or in concentrated form (precipitated ligneous component), and before or after mixing with the pulp, can be done by adding to water a commercial surfactant, hydrophylic or hydrophobic foaming chemical, and then foaming the mixture with air and then add as required the black liquor and other additives such as

12

starch etc. Foaming of various dilute solutions or suspensions is generally known, however, not with the high percent solids formed by the ligneous component produced in the present invention. Addition of the precipitated black liquor solids to the pulp slurry from which the black liquor is separated, lowers the stock freeness, i.e. drainage rate, since it holds or retains the fine, suspended particles usually lost without the use of retention agents through drainage on the paper machine wire. Addition of the black liquor to paper fibers in minor but sufficient amounts, say 2.0% up to about 15%, and generally in an amount of 2.0% to 5.0%, based on the solids and calculated on the dry weight of the fiber, will increase most paper strength properties, in an approximate ratio of improvement of 2:1 for equal weight of cellulose fiber. Depending on the degree of openness of the fiber web making up the paper and on pH levels ranging from 5.0—6.5, improvements in burst and stiffness show improvement ratios of 25:1 compared to an equivalent fiber weight. When black liquor solids are combined with an aqueous starch solution and added at high temperatures (e.g. about 65°C or above) at the size press, a satisfactory sizing of paperboard (Cobb 30—50) will be obtained and the effectiveness of the starch in improving paper quality is greatly improved permitting reduced starch usage. A small percentage, say from 0.4 to 1.0 percent of black liquor solids, based on the dry fiber content is generally sufficient for this purpose in addition to showing improvements in burst.

The acidified or neutral form of the black liquor can also add its binding properties to such resins as melamines or phenolics, permitting extension of these relatively expensive products. The black liquor can be used in the preparation of resins since its nitrated form is compatible chemically with that of many other resins.

Considering a comparison of the pulping process of the present invention with previous processes, several advantages are apparent. Chief among them is the ability to have a closed water and chemical cycle in a system which is economically feasible. As mild nitrating agent conditions are used and a pressurized system is not required, capital investment for my process is reduced by at least 25% when compared to present day mills.

Pulping installations (producing from 10 to 50 tons (10,000—50,000 kg) or 100 tons (100,000 kg) of pulp a day) become possible when the conventional chemical recovery system (which operates marginally only on a minimum production of 250 tons (250,000 kg) per day of pulp production) is eliminated. The time required for chemical treatment of the process of the present invention is less than one half the time of the most rapid present day chemical process for chemical pulp.

The process of the invention develops no perceptible odour. Contrastingly, those developed by the kraft pulp mills can still be objectionable many miles away. For this reason my pulping process can be located without objection near any community that has a requisite fiber source.

Historically, black liquor has had to be disposed of by evaporation and subsequent burning, or by discharge into lakes, rivers or the sea. These disposal methods contribute, of course, to air and water pollution. To some extent, some black liquor is used in the manufacture of tall oil, vanilla, drilling muds, and bonding extenders, but for the most part these operations are marginally economical. This invention contemplates the upgraded and profitable usage of 100% of the black liquor, providing a waste-free system.

The process of delignification serves to dissociate the fibers making up the natural fiber structure freeing the lignin and providing fibers which can be formed into a web for production of paper or board. On a modified or reduced scale of delignification in a relatively dry state (30—50% moisture) the lignin can be released in situ to act as a binder for the production of building board in which the fibrous structure remains essentially intact. Delignification will also increase the digestibility of fibrous structures for herbivores, cows and sheep etc. Animal feed is being produced today from straw by addition of ca. 5% NaOH to the dry weight of straw in a process which makes cubes or pellets with additional food additives. Additionally, work has been done with $NH_4OH$, liquid or gaseous $NH_3$, but this has not proven practical. Utilization of feed produced with NaOH is limited because the improvement in digestibility (food value) is low and the alkali content is high. An improvement to some 300% would be required to meet the food value of corn sileage. Levels of improvement presently obtained processing straw are one tenth of this, and maximum utilization in the animal's diet has not exceeded 15%.

This invention provides a controlled method of delignification which increases digestibility by up to about 150% to the point that the processed straw can comprise a minimum of 50% of the animal's total diet. Mixed during compounding with other food supplements, as molasses, urea, protein, etc., a complete food can be formulated. Of equal importance is the potential of this process to be economic in small installations which further makes possible a joint production facility producing alternatively, as required, animal feed and paper making fiber, providing flexibility to meet market demands local and long distance.

It is characteristic of agricultural residues that they are bulky making it impossible to meet minimum weight requirements of shipping carriers resulting in high freight costs. Processing under this invention makes viable the production of compact finished or semi-finished product of high density which greatly reduces freight and handling cost.

The alternatives provided by this invention in accomplishing nitration and subsequent delignification of agricultural residues extend to choices of various levels of chemical concentration

13

varying time and temperature for both nitration and delignification steps and a choice of alkaline chemicals (KOH, NaOH, $NH_4OH$) to accomplish the pH level necessary for solution of the nitrated lignin.

For example the process may be implemented using shredded grassy residue materials such as wheat straw, bagasse or shredded woody stems such as can be derived from 2—3 year old coppice willow or cotton stalks.

As a specific example: Baled wheat straw is shredded, a nitrating agent comprising nitric acid plus $Al_3(SO_4)_3 \cdot 18 H_2O$ in a ratio of 10 parts $HNO_3$ (100%) to 1 part aluminium sulphate (100%) is sprayed evenly on the shredded straw; 1%—4% nitrating agent to the dry weight of the straw.

The nitrated straw is heat treated in for example a rotary dryer at an air temperature of approximately 120°C, for approximately 20 minutes. During this interval the straw is completely diffused with the chemical. The lignin component reacts with the nitrating agent to form lignin nitrates and/or oxidized products soluble in alkaline pH (7.0+) solutions.

The pH levels of the straw leaving the heat treatment will characteristically be approximately about 6.0 pH when 1% nitrating agent is used, to a pH of 3—4 when 4.0% nitrating agent is used.

The nitrated straw can be immediately treated with hot alkali solution comprising an aqueous solution of 1.5 to 2% NaOH; KOH or $NH_4OH$ in an amount sufficient to comprise 2—5% by weight of straw and heat treated at 95—100°C for 10—15 minutes to obtain fiber release or softening of the fiber structure. Control of pH from 8.0 to 13.0 during this stage will result in increasing amounts of lignin being solubilized as the pH level increased.

Alternatively and more economically, the nitrated straw can be washed by submerging or spraying with water to remove excess acid and then pass to the alkalizing step for release of the lignin. The acidic wash water can then be used for bringing the pulp to a neutral pH level. The nitrating agent and alkali can also be added simultaneously to the straw before entering the dryer in such a ratio of use that a pH of 11—12 is maintained.

NaOH would commonly be used as the alkali in the manufacture of pulp for paper or board. For animal feed solutions of $NH_4OH$ or urea $CO(NH_2)_2$ are preferable since the sodium ion is eliminated or reduced but can be used in combination with NaOH to more easily control the pH level.

For cubed straw by extrusion the dry form of the nitrated straw is intimately mixed with the alkalizing solution raising the moisture content to not more than 15% to effect the formation of a firm condensed cube. In this form the straw can be economically transported and processed further in a hot solution for the production of paper or paper board or animal feed.

The ability to spray or foam the nitrating liquid on dry agricultural residues makes possible a process that is essentially dry and permits the surface leaching out of the nitrated lignin after the alkaline liquor is added by spray or foam (an action that can be simultaneous with or follow immediately after the nitrating stage) when the mass (10—15% moisture after drying if necessary) is subjected to heat and pressure. Enough surface lignin is released to provide a binding material sufficient to bind the shredded material. When it is then subjected to an appropriate hardening agent such as alum, which also provides water resistance and within the usual pressures and temperatures used in the manufacture of flake or particle board derived from wood residues, an inexpensive, water resistant building board, packaging board or fuel briquettes can be made from any defibered, flaked or chipped material by generating its own binding materials, eliminating or reducing the use of expensive resins such as phenolics.

The following examples are given as illustrations of the present invention. Alum or $Al_2(SO_4)_3$ always means $Al_2(SO_4)_3 \cdot 18 H_2O$ which, if applicable, is used in an amount of 10% based on the nitric acid (100%). In the examples, and in the specification and claims, all percentages refer to weight if not otherwise stated.

Example 1

Spruce wood chips were cooked in a covered non-pressure vessel—hydrapulper—under the following conditions:

$HNO_3$—$Al_2(SO_4)_3$ Stage

| | |
|---|---|
| Concentration | 3.8% |
| Time | 60 minutes |
| Temperature | 95°—100°C |
| Drain and wash | Recycle |

NaOH Stage

| | |
|---|---|
| pH Level | 12.5 |
| Time | 30 minutes |
| Temperature | 95°—100°C |
| Drain | Recycle |

Test results after defibering, screening and refining were:

| | |
|---|---|
| Bone dry yield | 70.5% |
| Kappa No. | 65 |
| Initial Schopper Riegler | 15° |
| Final Schopper Riegler | 30° |
| Basis weight | 137 gr/m² |
| Apparent density | 0.694 gr/cm³ |
| Burst | 6.2 Kpa |
| Elmendorf tear | 2060 mN |
| Tensile | 5009 m |
| Elongation | 2.94% |
| Double fold | 2140 |
| Ring crush | 1.62 Kn/m |

Example 2

Rice straw was cooked in the two stage acid-alkali process in varying percentage concentration of $HNO_3$—$Al_2(SO_4)_3$ under the following conditions: closed, non-pressure, rotating vessel, operating at 95°—100°C. Time to temperature each sequence 10 minutes—total cooking time: 30 minutes with intervening wash cycle. Alkali stage pH 11.5.

Test results after defibering-refining, but no screening, were as follows:

| Trial | 1 | 2 | 3 |
|---|---|---|---|
| Acid concentration % | 1.00 | 0.50 | 0.25 |
| Unbleached yield % | 39.6 | 52.4 | 57.9 |
| Bleached yield % | 35.6 | 46.3 | 49.7 |
| Initial G.E. brightness | 43 | 39 | 27 |
| Final G.E. brightness | 80 | 80 | 73 |
| Kappa No. | 8.5 | 20.2 | 34.5 |
| Ash % | 1.6 | 11.2 | 11.1 |
| Alpha cellulose % | 83.2 | 67.9 | 52.0 |
| Holo cellulose % | 95.9 | 79.5 | 74.7 |
| Schopper Riegler° | 40 | 56 | 62 |
| Basis weight gr/m² | 61.0 | 59.2 | 62.6 |
| Burst | 261 | 361 | 124 |
| Tensile | 3736 | 4631 | 2234 |
| Tear | 472 | 621 | 525 |
| Double fold | 6 | 17 | 4 |

Example 3

Southern pine wood flakes, cut tangentially to the log circumference to a thickness of about 0.6 mm, are continuously fed into a screw conveyor. The wood has a lignin content of about 35 wt. %. The flakes are submerged and cooked in about six times their weight of a solution of 5 weight percent nitric acid to which has been added aluminium sulphate in the ratio of 1 part aluminium sulphate to 10 parts $HNO_3$ for a period of about 15 minutes at a temperature of about 95°C. The slurry of flakes in acid is then fed into a rotary screen where the flakes are drained of the acid being washed with a minimal amount of hot water. The drained excess acid and wash water are combined, fortified with alum and concentrated nitric acid, as needed, and recycled for use in the initial nitration step. The flakes are then conducted to a storage vessel, from which they are fed into a screw conveyor, containing about six times their weight of a solution of about 0.5 weight percent sodium hydroxide, giving a pH of 12—13, at a temperature of about 95°C. There they are cooked for about 15 minutes. The flakes, partially defibered, are drained of the alkaline solution (in which the lignin-nitrate has dissolved) for its recycling or purging with a rotary screen, then put through a defibrator in order to separate the fibers, following which they are washed in a rotary washer with a minimal amount of hot water. The black liquor that is drained off in the rotary screen is recycled to the lignin extraction step.

The pulp leaving the rotary washer has been delignified to the extent required and defiberized. It is then screened by conventional screening equipment to remove oversized particles which have not been defiberized, which are returned to the nitration step for reprocessing.

# 0 032 919

Example 4

This example simulates the use of a sulphite digester producing bleachable pulp (Kappa No. 8) using pressure under conditions as follows:

| | |
|---|---|
| Wood | Spruce |
| Form | Flakes 0.5—0.6 mm thick |
| Charge | 1.3 kg (dry) |
| Digester | Stationary circulating |
| Impregnation time | 15 minutes |
| Impregnation temperature | 70°C |
| Impregnation chemical concentration | 5% $HNO_3$+alum |
| Cooking time | 15 minutes |
| Time to cooking temperature | 2 minutes |
| Cooking temperature | 85—95°C |
| Cooking chemical | 7.5% $HNO_3$+alum |
| Ratio liquor to dry wood | 4:1 |
| Pressure | 7—22 p.s.i.g. (48—152 kPa gauge) |
| Gas off | None |
| Delignification stage | 20 minutes |
| Delignification temperature | 95—100°C |
| Delignification chemical | 0.25% NaOH |
| Delignification pH | Starting 12 |

Test results on the paper produced were as follows:

| Test | Refining Minutes | | | | |
|---|---|---|---|---|---|
| | 0 | 5 | 7 | 10 | 13 |
| Freeness, °SR | 21 | 27 | 39 | 46 | 52 |
| Basis weight, gr/m² | 81.7 | 80.9 | 78.5 | 80.0 | 80.9 |
| Caliper, mm | 0.115 | 0.100 | 0.094 | 0.089 | 0.089 |
| Apparent density, kg/cm³ | 0.710 | 0.809 | 0.835 | 0.899 | 0.909 |
| Elongation % | 1.9 | 2.9 | 2.8 | 2.7 | 3.2 |
| Tensile strength, Mtr | 6600 | 7400 | 7360 | 7480 | 8240 |
| Mullen Abs, Kpg | 258 | 360 | 324 | 312 | 380 |
| Mullen Index, Kpa | 316 | 444 | 412 | 390 | 470 |
| Tear—Brecht-Imset, Mn | 1118 | 1187 | 942 | 922 | 1109 |

17

Example 5

A non-pressure process using low concentration circulated chemical and longer times producing linerboard pulp, Kappa No. 37 used the following conditions:

| | |
|---|---|
| Wood | Spruce flakes, 0.5—0.6 mm |
| Charge | 1.3 kg, dry |
| Impregnation time | 30 minutes |
| Impregnation temperature | 50°C |
| Impregnation chemical | 0.5% $HNO_3$ solution+alum |
| Cooking time | 45 minutes |
| Cooking temperature | 95°C |
| Cooking chemical | 1.8% $HNO_3$ solution+alum |
| Ratio of liquor to dry wood | 6 |
| Delignification chemical | NaOH |
| Delignification pH | Starting 12 |

Example 6

A non-pressure process using a hydrapulper producing an animal feed grade of straw:

| | |
|---|---|
| Wheat straw | Mechanically shredded |
| Charge | 1.2 kg, dry |
| Impregnation time | 15 minutes |
| Impregnation temperature | 50°C |
| Impregnation chemical | 0.05% $HNO_3$ solution+alum |
| Ratio of impregnation chemical to dry charge | 0.6% |
| Cooking time | 15 minutes |
| Cooking temperature | 95°C |
| Cooking chemical | 0.15% $HNO_3$ solution+alum |
| Ratio of cooking chemical to dry charge | 1.5% |
| Delignification | NaOH, pH 12, 95°C |

Example 7
A spray storage system for straw to produce pulp for packaging papers:

| | |
|---|---|
| Wheat straw | Mechanically shredded |
| Starting moisture | 12% (before spraying) |
| Finishing moisture | 35% |
| Chemical sprayed | 3% $HNO_3$ (100%) of dry fiber+alum |
| Heat applied | None |
| Storage period | Six months |
| Delignification | NaOH, pH 12 |
| Delignification time | 10 minutes |
| Delignification temperature | 50°C |

Example 8
A non-pressure process using an open hydrapulper producing a semi-chemical type pulp for use as corrugating medium combined with waste fiber and straw black liquor (lignin) solids.

| | |
|---|---|
| Wheat straw | Mechanically shredded |
| Charge | 1.2 kg atro |
| Impregnation time | 15 minutes |
| Impregnation chemical | 0.05% $HNO_3$ conc.+alum |
| Ratio of impregnation chemical to charge | 0.6% |
| Impregnation temperature | 50°C |
| Cooking time | 30 minutes |
| Cooking chemical | 0.15% $HNO_3$ conc.+alum |
| Cooking temperature | 95°C |
| Ratio of cooking chemical to charge | 1.5% |
| Delignification | 15 minutes, NaOH to pH 12, 95°C |

| Board composition | |
|---|---|
| Defibered unscreened pulp | 47% |
| Mixed waste fiber | 38% |
| Unmodified lignin solids | 15% |

| Test results—Produced on paper machine | |
|---|---|
| Basis weight, gr/m² | 105 |
| Mullen index, Kpa | 233 |
| Elmendorf tear, Md/Cd/Mn | 812/859 |
| Concora, Kgp | 158 |

19

**0 032 919**

**Claims**

1. A process for pulping ligno-cellulosic material wherein said material is treated with aqueous nitric acid characterized by using an aqueous nitric acid solution having a nitrate ion concentration of 0.001 to 9.0 weight percent and containing an aluminum compound in an amount of at least 0.01 parts by weight of aluminum ions for each 10 parts by weight of $HNO_3$.

2. The process of claim 1 characterized by using a nitrate ion concentrationn from 0.015 to 5.0 weight percent.

3. The process of claim 1 or 2 characterized in that the treatment with the aqueous nitric acid is carried out at a temperature from 75 to 100°C.

4. The process of claim 3 characterized by utilizing a temperature from 85 to 95°C.

5. The process of any of the preceding claims characterized in that the nitrated ligno-cellulosic material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 weight percent NaOH.

8. The process of any of the preceding claims characterized in that the nitrating step and the alkaline extraction step are both carried out under atmospheric pressure conditions and the $HNO_3$ concentration in the nitrating step is from 0.3 to 5.5 weight percent.

9. The process of any of claims 1, 2 and 5 to 8 characterized in that the nitration step is carried out at a pressure from 103 to 241 kPa and at temperature from 85 to 100°C.

10. The process of any of claims 1, 2 and 5 to 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separated from the nitrating agent solution and subjected to a water wash.

12. The process of any of the preceding claims characterized in that said aluminum compound is present in an amount from 0.065 to 0.105 parts by weight of aluminum ions per each 10 parts of $HNO_3$.

13. The process of any of the preceding claims characterized in that said aluminum compound is alum (aluminum sulfate).

14. The process of claim 13 characterized in that the amount of alum is from 0.8 to 1.3 parts by weight per each 10 parts by weight of $HNO_3$.

**Patentansprüche**

1. Verfahren zum Aufschluß von lignocellulosehaltigem Material, wobei das Material einer Behandlung mit wässriger Salpetersäure unterworfen wird, dadurch gekennzeichnet, daß man eine wässrige Salpetersäurelösung mit einer Nitrationenkonzentration von 0,001 bis 9,0 Gew.-% verwendet, die eine Aluminiumverbindung in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine Nitrationenkonzentration von 0,015 bis 5,0 Gew.-% anwendet.

3. Verfahren nach Anspruch 1 oder 2, dadurch gekennzeichnet, daß man die Behandlung mit der wässrigen Salpetersäure bei Temperaturen von 75 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulosehaltige Material der Behandlung mit einer alkalischen Extraktionsflüssigkeit zur Herauslösung der Ligninkomponente aus dem Material unter Erhalt eines Cellulosebreies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalische Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt und die $HNO_3$-Konzentration in der Nitrierstufe 0,3 bis 5,5 Gewichtsprozent beträgt.

9. Verfahren nach einem der Ansprüche 1, 2 und 5 bis 8, dadurch gekennzeichnet, daß man die Nitrierstufe bei Drükken von 107 bis 241 kPa und Temperaturen von 85 bis 110°C durchführt.

10. Verfahren nach einem der Ansprüche 1, 2 und 5 bis 5, dadurch gekennzeichnet, daß man die Nitrierstufe bei Drükken von 0,70 bis 1,03 MPa und Temperaturen von 85 bis 100°C durchführt.

20

# 0 032 919

11. Verfahren nach einem der Ansprüche 1 bis 10, dadurch gekennzeichnet, daß man im Anschluß an die Nitrierstufe und vor der alkalischen Extraktionsstufe das nitrierte lignocellulosehaltige Material von der Salpetersäurelösung abtrennt und einer Wasserwäsche unterwirft.

12. Verfahren nach einem der vorhergehenden Ansprüche, dadurch gekennzeichnet, daß die Aluminiumverbindung in einer Menge von 0,065 bis 0,105 Gewichtsteile Aluminiumionen pro 10 Teile $HNO_3$ anwesend ist.

13. Verfahren nach einem der vorhergehenden Ansprüche, dadurch gekennzeichnet, daß die Aluminiumverbindung Alaun (Aluminiumsulfat) ist.

14. Verfahren nach Anspruch 13, dadurch gekennzeichnet, daß die Menge des Alauns 0,8 bis 1,3 Gewichtsteile pro 10 Gewichtsteile $HNO_3$ beträgt.

## Revendications

1. Procédé pour réduire en pulpe une matière lignocellulosique où ladite matière est traitée avec de l'acide nitrique aqueux, caractérisé en ce qu'on utilise une solution aqueuse d'acide nitrique ayant une concentration d'ions de nitrate de 0.001 à 9.0% en poids et contenant un composé d'aluminium en une quantité d'au moins 0.01 partie en poids d'ions d'aluminium pour chacune des 10 parties en poids de $HNO_3$.

2. Procédé selon la revendication 1, caractérisé en ce qu'on utilise une concentration en ions de nitrate de 0.015 à 5.0% en poids.

3. Procédé selon la revendication 1 ou 2, caractérisé en ce que le traitement avec l'acide nitrique aqueux est effectué à une température de 75 à 100°C.

4. Procédé selon la revendication 3, caractérisé en ce qu'on utilise une température de 85 à 95°C.

5. Procédé selon l'une quelconque des revendications précédentes, caractérisé en ce que la matière ligno-cellulosique nitratée obtenue par le traitement avec l'acide nitrique aqueux est soumise à un traitement avec une liqueur alcaline d'extraction pour dissoudre le composant ligneux de la matière pour obtenir une pulpe cellulosique.

6. Procédé selon la revendication 5, caractérisé en ce que ladite extraction est effectuée à une température de 75 à 100°C.

7. Procédé selon la revendication 5 ou 6, caractérisé en ce que ladite extraction alcaline est effectuée avec une liqueur d'extraction contenant de 0,1 à 0,5% en poids de NaOH.

8. Procédé selon l'une quelconque des revendications précédentes, caractérisé en ce que l'étape de nitration et l'étape d'extraction alcaline sont toutes deux effectuées en conditions de pression atmosphérique et que la concentration en $HNO_3$ dans l'étape de nitration est de 0.3 à 5.5% en poids.

9. Procédé selon l'une quelconque des revendications 1, 2 et 5 à 8, caractérisé en ce que l'étape de nitration est effectuée à une pression de 103 à 241 kPa et à des températures de 85 à 100°C.

10. Procédé selon l'une quelconque des revendications 1, 2 et 5 à 8 caractérisé en ce que l'étape de nitration est effectuée à une pression de 0.70 à 1.03 MPa et à une température de 85 à 100°C.

11. Procédé selon l'une quelconque des revendications 1 à 10, caractérisé en ce qu'à la suite de l'étape de nitration et avant l'étape d'extraction alcaline, la matière ligno-cellulosique nitratée est séparée de la solution d'agents de nitration et est soumise à un lavage à l'eau.

12. Procédé selon l'une quelconque des revendications précédentes, caractérisé en ce que ledit composé d'aluminium est présent en une quantité de 0.065 à 0.105 parties en poids d'ions aluminium pour chacune des 10 parties en poids de $HNO_3$.

13. Procédé selon l'une quelconque des revendications précédentes, caractérisé en ce que ledit composé d'aluminium est de l'alun (sulfate d'aluminium).

14. Procédé selon la revendication 13, caractérisé en ce que la quantité d'alun est de 0.8 à 1.3 parties en poids pour chacune des 10 parties en poids de $HNO_3$.